# EUROPEAN PATENT SPECIFICATION

(11) **EP 3 802 433 B1**
(45) Date of publication and mention of the grant of the patent: **06.09.2023**
(21) Application number: 19812209.5
(22) Date of filing: 22.04.2019
(51) Int. Cl.: C02F 1/00, C02F 1/32, C02F 1/36, C02F 1/461

(54) **SONO-ELECTROCHEMICAL PHOTO CATALYTIC WATER TREATMENT REACTOR**
REAKTOR ZUR SONOELEKTROCHEMISCHEN PHOTOKATALITISCHEN WASSERBEHANDLUNG
RÉACTEUR SONO-ÉLECTROCHIMIQUE-PHOTOCATALYTIQUE POUR LE TRAITEMENT DE L'EAU

(30) Priority: 31.05.2018 TR 201807723
(43) Date of publication of application: 14.04.2021
(73) Proprietor: Anadolu Universitesi, 26470 Eskisehir (TR)
(72) Inventor: KOPARAL, Ali Savas, Eskisehir (TR); BAYRAKCI KAREL, Filiz, Eskisehir (TR); YILMAZ, Seval, Eskisehir (TR)
(74) Representative: Sevinç, Cenk
(86) International application number: PCT/TR2019/050269
(87) International publication number: WO 2019/231424

(56) References cited:
- WO-A1-2016/146986
- KR-A- 20040 069 718
- US-A- 4 752 401
- ZHANG ZHONGHAI ET AL: "Sonophotoelectrocatalytic degradation of azo dye on TiO2nanotube electrode", ULRASONICS SONOCHEMISTRY, BUTTERWORTH-HEINEMANN, GB, vol. 15, no. 4, 22 October 2007 (2007-10-22), pages 370-375, XP029615760, ISSN: 1350-4177, DOI: 10.1016/J.ULTSONCH.2007.09.017
- Tran Nam: "Optimization of sono-electrochemical oxidation of ibuprofen in wastewater", Journal of Environmental Chemical Engineering, 6 May 2015 (2015-05-06), XP055810019, DOI: http://dx.doi.org/10.1016/j.jece.2015.05.0 01 Retrieved from the Internet: URL:https://reader.elsevier.com/reader/sd/ pii/S2213343715001074?token=8E811B2E22D469 35AEB1068497E9EC9555AD8A50A0002009E0198ABC 4600AA458C791F9D38B70C26E87A42515067860F&o riginRegion=eu-west-1&originCreation=20210 602111516 [retrieved on 2021-06-02]
- SATHISHKUMAR, P. et al.: "Review on the recent improvements in sonochemical and combined sonochemical oxidation processes - A powerful tool for destruction of environmental contaminants", Renewable and Sustainable Energy Reviews, vol. 55, 2016, pages 426-454, XP029365898, DOI: 10.1016/j.rser.2015.10.139
- ALFARO, MARCO ANTONIO QUROZ et al.: "Boron doped diamond electrode for the wastewater treatment", Journal of the Brazilian Chemical Society, vol. 17, no. 2, 2006, pages 227-236, XP008092057,

## Description

### The Related Art

The invention relates to a sonoelectrochemical-photocatalytic reactor for providing safe treatment of wastewater with high pollution load and contributing to treatment of various types of industrial wastewaters.

The invention particularly relates to a sonoelectrochemical-photocatalytic reactor in which ultrasonic, electrochemical, and photocatalytic methods can be applied individually in a single reactor, and also three different treatment methods can run simultaneously.

### State of the Art

Water is the resource we need most. Apart from drinking water, treatment of wastewaters with high pollution loads is also very important. In this case, these wastewaters need to be treated. Due to the inadequacy of the currently used treatment methods, there are more and more studies on alternative hybrid advanced treatment systems. One of these alternatives is the treatment in which ultrasonic, electrochemical and photocatalytic methods are used together.

While the areas of use of ultrasonic applications increase day by day, ultrasound technology has been used in science and technology for a long time. Ultrasound technology has been used for many years in various physical and chemical reactions in different areas of the industry. Its applications in liquid media are: cleaning, separation of solids, soldering, sterilization, sanding, filtering, abrasion testing, atomization, cell separation, crystal growth, extraction from plants, melting crystallization, emulsification, and degassing. In the ultrasound process, the sound waves given to the aquatic environment at the appropriate temperature and pressure change the physical and chemical composition of the water and cause radicals such as H., OH·, and H2O2. These radicals convert the toxic and organic compounds in the wastewater into stable end products such as CO2, N2, NO3, COOH or less harmful compounds.

Electrochemical wastewater treatment is the treatment method where the basic principles of electrochemistry and electrochemical engineering are used. Electrode reactions in electrochemical reactors are heterogeneous reduction and oxidation reactions in solid-liquid interfaces. Wastewater treatment is carried out with electrochemical treatment methods.

The main principle in electrooxidation method, which is one of the electrochemical treatment methods, is to provide the desired oxidation with the gases (02 and H2) obtained by means of the electrodes by using insoluble electrodes (Ti, Ru, Pt, stainless steel etc.). With this process, many substances can be oxidized, while compounds that are difficult to biodegrade are converted to easily biodegradable organic compounds or to end products such as CO2 and H2O.

Photocatalytic systems can be defined as the transformation of solar energy into chemical energy. During this conversion, hydroxyl radical is formed. This radical is a very strong oxidizing agent and plays an important role in the oxidation of organic substances to CO2 by reacting with various organic pollutants in the water. When photocatalytic systems are exposed to ultraviolet radiation, they go into a chemical reaction and release active oxygen. Active oxygen structure has properties such as oxidation and degradation of organic substances, removal of bacteria, and purification of air from unwanted odours.

Patent file No. EP2176173 describes processes in which treatment chambers are used to separate the compounds in the wastewater. More particularly, treatment chambers utilize ultrasonic energy and an electrode potential to ensure effective removal of compounds from wastewaters such as textile wastewater.

Patent file No. EP3268315 describes a sonoelectrochemical device for treating wastewater. The device comprises a long anode arranged along the central axis of a grounded reactor housing electrode defining a treatment zone therein. A voltage is applied to the water to be treated so that it flows through the treatment zone by applying an electrically grounded reactor wall acting as a voltage and cathode along the anode. The piezoelectric transducers placed outside the chamber apply ultrasonic energy to the water flowing through the treatment zone. The combination of electrolysis and ultrasonic energy removes pollutants from water.

Other examples of known processes and apparatuses can be found in Korean Patent KR 2004 0069718 A, in Zhang Zhonghai et al., "Sonophotoelectrocatalytic degradation of azo dye on TiO2 nanotube electrode", ULTRASONICS SONOCHEMISTRY, BUTTERWORTH-HEINEMANN, GB, vol. 15, no. 4, 22 October 2007 and in Tran Nam: "Optimization of sonoelectrochemical oxidation of ibuprofen in wastewater", Journal of Environmental Chemical Engineering, 6 May 2015.

The ultrasonic systems used in known from the prior art are ineffective in disinfection as well as in treatment of wastewaters with high pollution loads.

In the prior art, the reactions in the electrochemical treatment are carried out on the electrode surface. During electrochemical treatment, the layer on the electrode surface reduces the reaction efficiency and consequently the removal efficiency.

The photocatalytic systems used in the prior art may be insufficient in the treatment of wastewaters with high pollution loads.

As a result, the above said drawbacks and the inadequacy of the prior art solutions about the subject have necessitated an improvement in the related technical field.

### Purpose of the Invention

The most important purpose of the invention is to provide effective degradation by combining one or more methods where the treatment methods alone are not sufficient.

Another important purpose of the invention is that, according to the content of the wastewater to be treated, ultrasonic, electrochemical, photocatalytic methods can be applied separately in a single reactor, or binary combinations thereof and three different treatment methods can be applied at the same time.

Another purpose of the invention is to provide a reactor that is suitable for operating in both batch and continuous systems.

Another purpose of the invention is to eliminate organic pollutants from water by using a UV lamp providing photocatalytic effect and a transducer generating sound at various frequencies, can be operated at different power levels, and positioned at the bottom of the reactor so as to prevent pacification that may occur on the electrode surface during electrochemical treatment.

Another purpose of the invention is to perform the degradation of organic pollutants by increasing the mass transfer, as well as by the cavitation effect formed and by the radicals produced in the system.

Another purpose of the invention is to increase the removal efficiency, reduce the treatment time and consequently reduce the cost and obtain more stable sludge.

The structural and characteristic features of the invention and all of its advantages shall be understood better with the figures and the detailed description given below in reference to the figures. Therefore, the assessment should be made by taking into account the said figures and detailed explanations.

### Description of the Figures

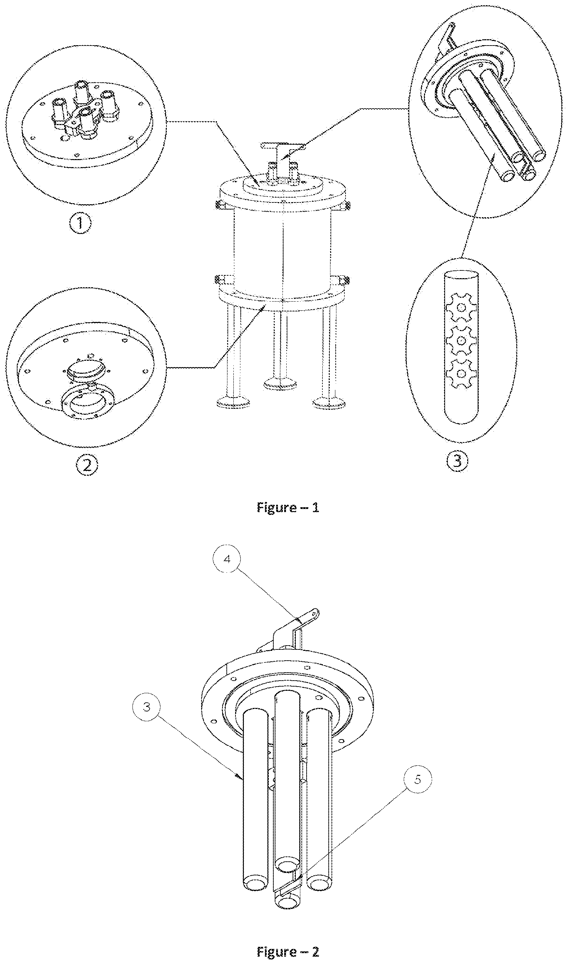

**Figure** 1 is an isometric view of the sonoelectrochemical-photocatalytic reactor.
**Figure** 2 is a view of a UV lamp system and an electrode bundle mounted on the upper cover.

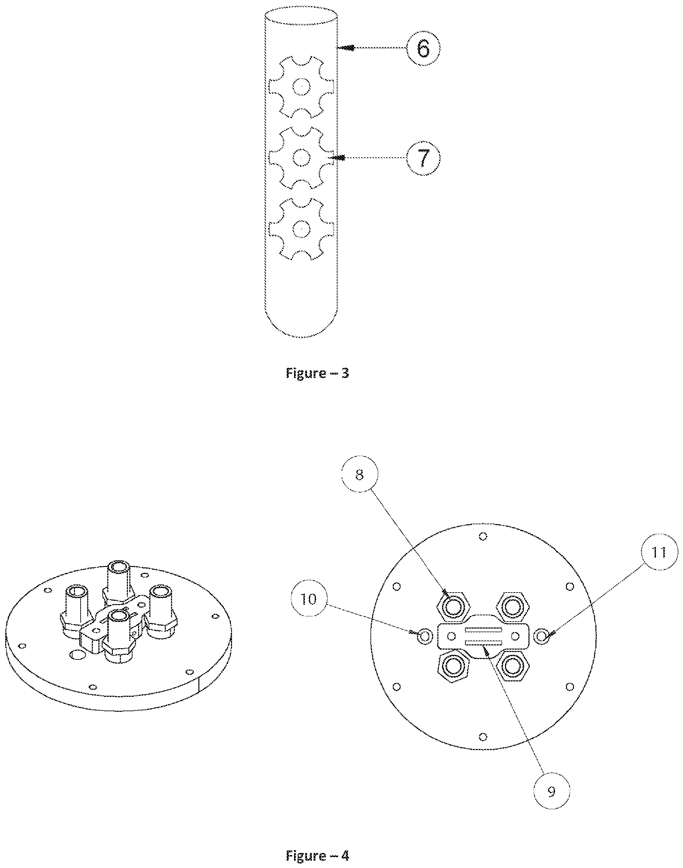

**Figure** 3 is a view of the UV lamp of the sonoelectrochemical-photocatalytic reactor.
**Figure** 4 is a view of the sonoelectrochemical-photocatalytic reactor upper cover.

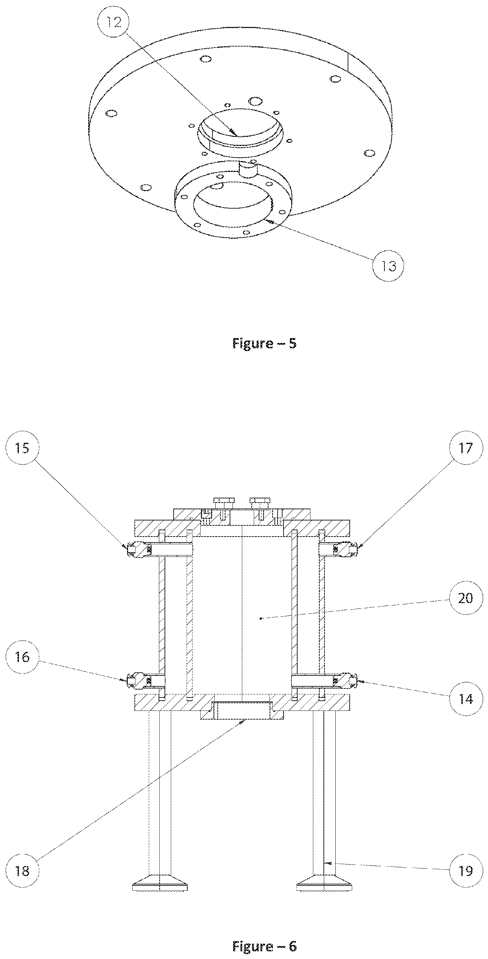

**Figure** 5 is a view of the sonoelectrochemical-photocatalytic reactor lower cover.
**Figure** 6 is a view of the sonoelectrochemical-photocatalytic reactor section.

### Reference Numbers

**1.** Reactor Upper Cover
**2.** Reactor Lower Cover
**3.** UV Lamp
**4.** Electrode Connection Apparatus
**5.** Electrode
**6.** Quartz Tube
**7.** UV LED
**8.** UV Lamp Housing
**9.** Electrode Housing
**10.** Sampling Hole
**11.** Gas Outlet Hole
**12.** Transducer Housing
**13.** Transducer Connection Flange
**14.** Wastewater Inlet
**15.** Wastewater Outlet
**16.** Cooling Water Inlet
**17.** Cooling Water Outlet
**18.** Transducer
**19.** Reactor Balance Legs
**20.** Body

### Description of the Invention

The sonoelectrochemical-photocatalytic water treatment reactor of the present invention comprises a transducer (18) system, a UV lamp (3) for photocatalytic effect, and a bundle of electrodes (5) for electrochemical effect.

Water treatment is performed by choosing the frequency and power for the transducer (18) system, the type of photocatalyst and UV lamp (3) for the photocatalytic systems (number of quartz tubes, number of UV LEDs, and frequency and power of UV LED), and the current, voltage, and appropriate electrode material for the electrochemical systems.

While these three separate systems can operate in a hybrid manner, if required, each of them can operate alone or in the form of binary systems. Moreover, the reactor is suitable for operating with both batch and continuous systems.

The cylindrically shaped body (20) positioned on the reactor balance legs (19) of the sonoelectrochemical-photocatalytic water treatment reactor according to the invention is surrounded by a cooler mantle having a cooling water inlet (16) and a cooling water outlet (17). A wastewater inlet (14) and a wastewater outlet (15) are found for continuous system. The wastewater inlet (14) ensures entrance of the wastewater coming into the system, while the wastewater outlet (15) ensures exit of the water treated within the system. The body is preferably made of plexiglass material and its height/diameter rate is preferably used at almost 1:2. In other words, it is used such that the height would be twice the diameter.

The transducer (18) is positioned at the reactor lower cover (2) and ensures the generation of 20 to 800 kHz ultrasonic waves, and also ensures increasing the mass transfer in the system and degradation of the organic pollutants by being operated at different power levels.

The electrodes (5) are in the form of a parallel plates and are immersed into the wastewater within the cylindrical body (20) and connected to the power supply via the electrode connection apparatus (4). The electrodes (5) may be formed of boron-doped diamond (BDD) with nano-coating or of metal mix (MOx) bundle.

The UV lamp (3) is placed within the cylindrically shaped body (20) or portably outside the electrode (5), and can be removed when desired.

The UV lamp (3) providing the photocatalytic effect and the transducer (18) generating sound at various frequencies between 20 to 800 kHz, operating at different power levels, and positioned at the bottom of the reactor so as to prevent pacification that may occur on the electrode surface during electrochemical treatment ensure removal of pollutants in the water.

The electrode connection apparatus (4) mounted to the electrode housings (9) located in the upper cover (1) of the reactor according to the present invention has the ability to move in the vertical axis. Different types of electrodes (5) can be used depending on the characteristics and amount of the wastewater preferred to be treated, and the electrode surface area, as an important parameter in electrochemical treatment, is immersed in the wastewater. A sampling hole (10) and a gas outlet holes (11) found at the reactor upper cover (1) are, when desired, closed by means of a stopper, and allow the gas formed in the system to be accumulated in a different chamber. In this way, it becomes possible to collect the gases formed during the treatment process for generation of energy.

UV LEDs (7) are placed in the quartz tubes (6) mounted to the UV lamp housings (8) located on the reactor upper cover (2). The number, wavelength, and power of the UV LEDs (7) to be placed within the quartz tubes (6) can be determined based on the characteristics and amount of the wastewater.

The flange system (13) of the sonoelectrochemical-photocatalytic water treatment reactor of the present invention enables the transducer (18) to be mounted to the transducer housing (12) located at the reactor lower cover (2) and to be replaced according to the desired frequency depending on the characteristics and quantity of the wastewater.

## Claims

1. Sonoelectrochemical-photocatalytic reactor for the treatment of wastewater with pollution loads, **characterized in that** it comprises:
• at least one cylindrically shaped body (20), surrounded by a cooling mantle having a cooling water inlet (16) and a cooling water outlet (17), and located on reactor balance legs (19),
• a wastewater inlet (14) allowing the wastewater to enter into the reactor,
• a wastewater outlet (15) allowing the water treated in the reactor to exit the reactor,
• a transducer (18) capable of providing frequency between the range of 20 to 800 kHz located at the reactor lower cover (2), allowing generation of ultrasonic waves, and, by being operated at different power levels, ensuring increase of mass transfer in the system and degradation of organic pollutants,
• a bundle of electrodes (5) having a parallel plate shape to be connected to a power supply by an electrode connection apparatus (4) and immersed in the wastewater within the body (20),
• a sampling hole (10) and gas outlet hole (11) found on the upper cover (1) of the reactor, preferably closed by means of a stopper, and allowing the gas formed in the system to be accumulated in a different chamber,
• a transducer connection flange (13) allowing the transducer (18) to be mounted to the transducer housing (12) located at the reactor lower cover (2) to be replaced according to the desired frequency based on the characteristics and amount of the wastewater, and
• a UV lamp (3) portably placed within the body (20) and outside the electrode (5) bundle, that can be removed when desired, and providing photocatalytic effect, whereby the electrode connection apparatus (4) located on the reactor upper cover (1), mounted to electrode housings (9), and capable of moving in the vertical axis.

## Patentansprüche

1. Sonoelektrochemisch-photokatalytischer Reaktor für die Behandlung von Abwässern mit Verschmutzungen, **dadurch gekennzeichnet, dass** er umfasst:
• mindestens ein zylindrisch geformtes Gehäuse (20), das von einer Kühlhaube mit einem Kühlwassereinlass (16) und einem Kühlwasserauslass (17) umgeben ist und auf Balancebeinen des Reaktors (19) steht,
• einen Abwassereinlass (14), der das Abwasser in den Reaktor einlässt,
• einen Abwasserauslass (15), der das im Reaktor behandelte Wasser aus dem Reaktor ablässt,
• einen Messwandler (18), der Frequenzen zwischen 20 und 800 kHz bereitstellen kann und am unteren Reaktordeckel (2) angeordnet ist, wodurch Ultraschallwellen erzeugt werden, und der durch Betrieb mit unterschiedlichen Leistungsstufen eine Erhöhung des Massentransports im System und eine Zersetzung organischer Schadstoffe sicherstellt,
• einen Bündel von Elektroden (5) in paralleler Plattenform, die über ein Elektrodenanschlussgerät (4) an eine Stromversorgung angeschlossen und im Abwasser im Gehäuse (20) eingetaucht sind,
• ein Probenahmeloch (10) und ein Gasauslassloch (11) am oberen Reaktordeckel (1), die vorzugsweise durch einen Stopfen verschlossen sind und es ermöglichen, dass das im System entstehende Gas in einem separaten Behälter angesammelt wird,
• eine Messwandleranschlussflansch (13), die es ermöglicht, den Messwandler (18) am Messwandlergehäuse (12) am unteren Reaktordeckel (2) zu montieren und je nach gewünschter Frequenz auf Basis der Eigenschaften und Menge des Abwassers zu ersetzen, und
• eine UV-Lampe (3), die innerhalb des Gehäuses (20) und außerhalb des Elektrodenbündels (5) tragbar angebracht ist, die entfernt werden kann, wenn gewünscht, und einen photokatalytischen Effekt liefert, wobei das Elektrodenanschlussgerät (4) auf dem oberen Reaktordeckel (1) angebracht ist, an Halterungen für Elektroden (9) montiert ist und in der Lage ist, in der vertikalen Achse zu verschieben.

## Revendications

1. Réacteur sonoélectrochimique-photocatalytique pour le traitement des eaux usées chargées polluantes, **caractérisé en ce qu'**il comprend:
• au moins un corps de forme cylindrique (20), entouré d'un manteau de refroidissement ayant une entrée d'eau de refroidissement (16) et une sortie d'eau de refroidissement (17), et situé sur les pieds d'équilibrage du réacteur (19),
• une entrée d'eaux usées (14) permettant aux eaux usées d'entrer dans le réacteur,
• une sortie d'eaux usées (15) permettant aux eaux traitées dans le réacteur de sortir du réacteur,
• un transducteur (18) capable de fournir une fréquence comprise dans la plage de 20 à 800 kHz situé au niveau du capot inférieur du réacteur (2), permettant la génération d'ondes ultrasoniques, et, en fonctionnant à différents niveaux de puissance, assurant l'augmentation du transfert de masse dans le système et la dégradation des polluants organiques,
• un faisceau d'électrodes (5) ayant une forme de plaques parallèles à connecter à une alimentation électrique par un appareil de connexion d'électrodes (4) et immergé dans les eaux usées à l'intérieur du corps (20),
• un orifice de prélèvement (10) et de sortie de gaz (11) situé sur le couvercle supérieur (1) du réacteur, de préférence obturé au moyen d'un bouchon, et permettant d'accumuler le gaz formé dans le système dans une chambre différente,
• une bride de connexion de transducteur (13) permettant au transducteur (18) d'être monté sur le boîtier de transducteur (12) situé au niveau du couvercle inférieur du réacteur (2) pour être remplacé en fonction de la fréquence souhaitée sur la base des caractéristiques et de la quantité des eaux usées, et
• une lampe UV (3) placée de manière portable à l'intérieur du corps (20) et à l'extérieur du faisceau d'électrodes (5), qui peut être retirée si souhaité, et fournissant un effet photocatalytique, l'appareil de connexion d'électrodes (4) étant situé sur le couvercle supérieur du réacteur (1), monté sur des boîtiers d'électrodes (9) et capable de se déplacer dans l'axe vertical.
